# EUROPEAN PATENT APPLICATION

(11) **EP 4 221 305 A1**
(43) Date of publication of application: **02.08.2023**
(21) Application number: 20957166.0
(22) Date of filing: 15.10.2020
(51) Int. Cl.: H04W 24/10, H04W 76/27, H04B 17/309

(54) **COMMUNICATION METHOD AND COMMUNICATION APPARATUS**

(71) Applicant: Huawei Technologies Co., Ltd., Shenzhen, Guangdong 518129 (CN)
(72) Inventor: YUAN, Shitong, Shenzhen, Guangdong 518129 (CN); FAN, Bo, Shenzhen, Guangdong 518129 (CN); ZHANG, Xi, Shenzhen, Guangdong 518129 (CN); CHEN, Lei, Shenzhen, Guangdong 518129 (CN); GUAN, Peng, Shenzhen, Guangdong 518129 (CN)
(74) Representative: Huawei European IPR
(86) International application number: PCT/CN2020/121302
(87) International publication number: WO 2022/077387

(57) **Abstract**

Embodiments of this application disclose a communication method and an apparatus, and relate to the communication field, to support a terminal device in performing beam failure detection in a common beam scenario. The method includes: A terminal device receives a first transmission configuration indicator TCI from an access network device, where the TCI may indicate a common beam. For example, the first TCI includes information about a first uplink reference signal and/or information about a first downlink reference signal, a spatial transmission filter corresponding to the first uplink reference signal is used for sending a plurality of uplink channels, and the first downlink reference signal and demodulation reference signals DMRSs of a plurality of downlink channels meet a quasi co-location QCL relationship. Further, the terminal device further measures the first downlink reference signal or a downlink reference signal associated with the first uplink reference signal, and performs beam failure detection based on a measurement result, where the spatial transmission filter corresponding to the first uplink reference signal is used for receiving the downlink reference signal associated with the first uplink reference signal.

## Description

### TECHNICAL FIELD

Embodiments of this application relate to the communication field, and in particular, to a communication method and an apparatus.

### BACKGROUND

In a communication technology, electromagnetic wave signals may be converged in space and propagated in a beam form. A beam failure (beam failure) may occur due to restriction of actual propagation paths of the electromagnetic wave signals. For example, when a beam is blocked by an object, a signal/channel transmitted through the beam cannot be correctly received by a receiving end, and consequently communication between a transmitting end and the receiving end is interrupted. To reduce impact of a beam failure on the communication between the transmitting end and the receiving end as much as possible, beam failure detection may be performed to switch to another beam, thereby reducing interruption duration of the communication between both parties.

In a conventional technology, UE may measure a reference signal associated with a beam used for receiving a physical downlink control channel (physical downlink control channel, PDCCH). When measurement results are all lower than a threshold within a period, the UE may determine that a beam failure occurs, and start a beam failure recovery process.

In a common beam scenario, a beam may be used for receiving or sending a plurality of channels. In this scenario, how a terminal device performs beam failure detection is not clear. Currently, there is no technical solution in which the terminal device determines a beam used for beam failure detection in this scenario.

### SUMMARY

Embodiments of this application provide a communication method and an apparatus, to support a terminal device in performing beam failure detection in a common beam scenario.

According to a first aspect, a communication method is provided. The method includes: A terminal device receives a first transmission configuration indicator TCI from an access network device, where the TCI may indicate a common beam. For example, the first TCI includes information about a first uplink reference signal and/or information about a first downlink reference signal, a spatial transmission filter corresponding to the first uplink reference signal is used for sending a plurality of uplink channels, the first downlink reference signal and demodulation reference signals DMRSs of a plurality of downlink channels meet a quasi co-location QCL relationship, and a spatial transmission filter used for receiving the first downlink reference signal is used for sending the plurality of uplink channels. Further, the terminal device may further measure the first downlink reference signal or a downlink reference signal associated with the first uplink reference signal, and perform beam failure detection based on a measurement result, where the spatial transmission filter corresponding to the first uplink reference signal is used for receiving the downlink reference signal associated with the first uplink reference signal.

After the common beam is introduced, how the terminal device performs beam failure detection is not clear. Currently, there is no technical solution in which the terminal device determines a beam used for beam failure detection in this scenario. In the method provided in embodiments of this application, the terminal device may determine, based on the TCI sent by a base station, the common beam (for example, a beam corresponding to the spatial transmission filter used for receiving the first downlink reference signal, a beam used for receiving the first downlink reference signal, the spatial transmission filter used for sending the first uplink reference signal, or a beam used for sending the first uplink reference signal). The terminal device may further determine, based on the TCI sent by the base station, a downlink reference signal used for beam failure detection. For example, the downlink reference signal indicated by the TCI is used for the beam failure detection, or the downlink reference signal associated with an uplink reference signal indicated by the TCI is used for the beam failure detection. In a common beam scenario, the terminal device can perform beam failure detection, so that the terminal device can perform beam recovery as soon as possible, thereby improving communication performance.

With reference to the first aspect, in a first possible implementation of the first aspect, the method further includes: sending the plurality of uplink channels through the spatial transmission filter corresponding to the first uplink reference signal, receiving the plurality of downlink channels through the spatial transmission filter corresponding to the first uplink reference signal, receiving the plurality of downlink channels through the spatial transmission filter used for receiving the first downlink reference signal, and/or sending the plurality of uplink channels through the spatial transmission filter used for receiving the first downlink reference signal.

In this embodiment of this application, the terminal device may further determine the common beam (for example, the beam corresponding to the spatial transmission filter used for sending the first uplink reference signal, or the beam corresponding to the spatial transmission filter used for receiving the first downlink reference signal) based on a common TCI indicated by the access network device, and send a plurality of channels through the common beam, to support the common beam scenario.

With reference to any one of the first aspect or the possible implementations of the first aspect, in a second possible implementation of the first aspect, the method further includes: The terminal device determines, based on the measurement result, that a beam failure occurs, measures a downlink reference signal associated with a candidate beam, determines, based on a measurement result of the downlink reference signal associated with the candidate beam, a parameter of a first spatial transmission filter used for sending a beam failure recovery request, sends the beam failure recovery request to the access network device through the first spatial transmission filter, and receives a beam failure recovery request response from the access network device through the first spatial transmission filter.

In this application, after determining that the beam failure occurs, the terminal device may further perform beam recovery, to communicate with the access network device through a new beam (q_new) as soon as possible, thereby improving the communication performance.

With reference to any one of the first aspect or the possible implementations of the first aspect, in a third possible implementation of the first aspect, after the receiving the beam failure recovery request response from the access network device through the first spatial transmission filter, the method further includes: sending the plurality of uplink channels through the first spatial transmission filter, and/or receiving the plurality of downlink channels through the first spatial transmission filter.

In this application, after determining that the beam failure occurs, the terminal device may further automatically update the activated common TCI, deactivate the currently activated first TCI, and activate a TCI corresponding to the first spatial transmission filter, so that a plurality of channels may be transmitted through the first spatial transmission filter.

With reference to any one of the first aspect or the possible implementations of the first aspect, in a fourth possible implementation of the first aspect, the beam failure recovery request response includes a second TCI, the second TCI includes information about a second uplink reference signal and/or information about a second downlink reference signal, a spatial transmission filter corresponding to the second uplink reference signal is used for sending the plurality of uplink channels, and the second downlink reference signal and the DMRSs of the plurality of downlink channels meet a QCL relationship.

In this application, after the terminal device determines that the beam failure occurs, the currently activated common TCI (for example, the first TCI described above) becomes invalid, and the terminal device further obtains a new common TCI from the beam failure recovery request response that is sent by the access network device. The beam failure recovery request response indicates the new common TCI, so that the terminal device can perform communication more quickly through a new uplink beam and a new downlink beam, and the terminal device can quickly recover high-rate communication, thereby improving network efficiency.

With reference to any one of the first aspect or the possible implementations of the first aspect, in a fifth possible implementation of the first aspect, the method further includes: sending the plurality of uplink channels through the spatial transmission filter corresponding to the second uplink reference signal, receiving the plurality of downlink channels through the spatial transmission filter corresponding to the second uplink reference signal, receiving the plurality of downlink channels through a spatial transmission filter used for receiving the second downlink reference signal, and/or sending the plurality of uplink channels through the spatial transmission filter used for receiving the second downlink reference signal.

In this application, after receiving the new common TCI indicated by the access network device, the terminal device may use the spatial transmission filter indicated by the new common TCI as a common spatial transmission filter, and send a plurality of channels through the common spatial transmission filter.

According to a second aspect, a communication method is provided. The method includes: An access network device determines a first transmission configuration indicator TCI, where the first TCI includes information about a first uplink reference signal and/or information about a first downlink reference signal, a spatial transmission filter corresponding to the first uplink reference signal is used for sending a plurality of uplink channels, and the first downlink reference signal and demodulation reference signals DMRSs of a plurality of downlink channels meet a quasi co-location QCL relationship; and the access network device sends the first TCI to a terminal device.

After a common beam is introduced, how the terminal device performs beam failure detection is not clear. Currently, there is no technical solution in which the terminal device determines a beam used for beam failure detection in this scenario. In the method provided in this embodiment of this application, a base station may send a common TCI to the terminal device, and the terminal device may determine, based on the TCI sent by the base station, the common beam (for example, a beam corresponding to a spatial transmission filter used for receiving the first downlink reference signal, a beam used for receiving the first downlink reference signal, the spatial transmission filter used for sending the first uplink reference signal, or a beam used for sending the first uplink reference signal). The terminal device may further determine, based on the TCI sent by the base station, a downlink reference signal used for beam failure detection. For example, the downlink reference signal indicated by the TCI is used for the beam failure detection, or the downlink reference signal associated with an uplink reference signal indicated by the TCI is used for the beam failure detection. In a common beam scenario, the terminal device can perform beam failure detection, so that the terminal device can perform beam recovery as soon as possible, thereby improving communication performance.

With reference to the second aspect, in a first possible implementation of the second aspect, the method further includes: The access network device receives the plurality of uplink channels that are sent by the terminal device through the spatial transmission filter corresponding to the first uplink reference signal; the access network device sends the plurality of downlink channels to the terminal device, where the plurality of downlink channels are received through the spatial transmission filter corresponding to the first uplink reference signal; the access network device sends the plurality of downlink channels to the terminal device, where the plurality of downlink channels are received through the spatial transmission filter used for receiving the first downlink reference signal; and/or the access network device receives the plurality of uplink channels that are sent by the terminal device through the spatial transmission filter used for receiving the first downlink reference signal.

With reference to any one of the second aspect or the possible implementations of the second aspect, in a second possible implementation of the second aspect, the method further includes: receiving a beam failure recovery request that is sent by the terminal device through a first spatial transmission filter, where the first spatial transmission filter is determined by the terminal device by measuring a downlink reference signal associated with a candidate beam; and sending a beam failure recovery request response to the terminal device, where the beam failure recovery request response is received through the first spatial transmission filter.

With reference to any one of the second aspect or the possible implementations of the second aspect, in a third possible implementation of the second aspect, the method further includes: receiving the plurality of uplink channels that are sent by the terminal device through the first spatial transmission filter, and/or sending the plurality of downlink channels to the terminal device, where the plurality of downlink channels are received through the first spatial transmission filter.

With reference to any one of the second aspect or the possible implementations of the second aspect, in a fourth possible implementation of the second aspect, the beam failure recovery request response includes a second TCI, the second TCI includes information about a second uplink reference signal and/or information about a second downlink reference signal, a spatial transmission filter corresponding to the second uplink reference signal is used for sending the plurality of uplink channels, and the second downlink reference signal and the DMRSs of the plurality of downlink channels meet a QCL relationship.

With reference to any one of the second aspect or the possible implementations of the second aspect, in a fifth possible implementation of the second aspect, the method further includes: receiving the plurality of uplink channels that are sent by the terminal device through the spatial transmission filter corresponding to the second uplink reference signal; sending the plurality of downlink channels to the terminal device, where the plurality of downlink channels are received through the spatial transmission filter corresponding to the second uplink reference signal; sending the plurality of downlink channels to the terminal device, where the plurality of downlink channels are received through a spatial transmission filter for the second downlink reference signal; and/or receiving the plurality of uplink channels that are sent by the terminal device through the spatial transmission filter used for receiving the second downlink reference signal.

According to a third aspect, a communication apparatus is provided. The apparatus includes: a communication unit, configured to receive a first transmission configuration indicator TCI from an access network device, where the first TCI includes information about a first uplink reference signal and/or information about a first downlink reference signal, a spatial transmission filter corresponding to the first uplink reference signal is used for sending a plurality of uplink channels, and the first downlink reference signal and demodulation reference signals DMRSs of a plurality of downlink channels meet a quasi co-location QCL relationship; and a processing unit, configured to: measure the first downlink reference signal or a downlink reference signal associated with the first uplink reference signal, and perform beam failure detection based on a measurement result, where the spatial transmission filter corresponding to the first uplink reference signal is used for receiving the downlink reference signal associated with the first uplink reference signal.

With reference to the third aspect, in a first possible implementation of the third aspect, the communication unit is further configured to: send the plurality of uplink channels through the spatial transmission filter corresponding to the first uplink reference signal, receive the plurality of downlink channels through the spatial transmission filter corresponding to the first uplink reference signal, receive the plurality of downlink channels through a spatial transmission filter used for receiving the first downlink reference signal, and/or send the plurality of uplink channels through the spatial transmission filter used for receiving the first downlink reference signal.

With reference to any one of the third aspect or the first possible implementation of the third aspect, in a second possible implementation of the third aspect, the processing unit is further configured to: determine, based on the measurement result, that a beam failure occurs, measure a downlink reference signal associated with a candidate beam, and determine, based on a measurement result of the downlink reference signal associated with the candidate beam, a parameter of a first spatial transmission filter used for sending a beam failure recovery request; and the communication unit is further configured to: send the beam failure recovery request to the access network device through the first spatial transmission filter, and receive a beam failure recovery request response from the access network device through the first spatial transmission filter.

With reference to any one of the third aspect or the possible implementations of the third aspect, in a third possible implementation of the third aspect, the communication unit is further configured to: send the plurality of uplink channels through the first spatial transmission filter, and/or receive the plurality of downlink channels through the first spatial transmission filter.

With reference to any one of the third aspect or the possible implementations of the third aspect, in a fourth possible implementation of the third aspect, the beam failure recovery request response includes a second TCI, the second TCI includes information about a second uplink reference signal and/or information about a second downlink reference signal, a spatial transmission filter corresponding to the second uplink reference signal is used for sending the plurality of uplink channels, and the second downlink reference signal and the DMRSs of the plurality of downlink channels meet a QCL relationship.

With reference to any one of the third aspect or the possible implementations of the third aspect, in a fifth possible implementation of the third aspect, the communication unit is further configured to: send the plurality of uplink channels through the spatial transmission filter corresponding to the second uplink reference signal, receive the plurality of downlink channels through the spatial transmission filter corresponding to the second uplink reference signal, receive the plurality of downlink channels through a spatial transmission filter used for receiving the second downlink reference signal, and/or send the plurality of uplink channels through the spatial transmission filter used for receiving the second downlink reference signal.

According to a fourth aspect, a communication apparatus is provided. The apparatus includes: a processing unit, configured to determine a first transmission configuration indicator TCI, where the first TCI includes information about a first uplink reference signal and/or information about a first downlink reference signal, a spatial transmission filter corresponding to the first uplink reference signal is used for sending a plurality of uplink channels, and the first downlink reference signal and demodulation reference signals DMRSs of a plurality of downlink channels meet a quasi co-location QCL relationship; and a communication unit, configured to send the first TCI to a terminal device.

With reference to the fourth aspect, in a first possible implementation of the fourth aspect, the communication unit is further configured to: receive the plurality of uplink channels that are sent by the terminal device through the spatial transmission filter corresponding to the first uplink reference signal; send the plurality of downlink channels to the terminal device, where the plurality of downlink channels are received through the spatial transmission filter corresponding to the first uplink reference signal; send the plurality of downlink channels to the terminal device, where the plurality of downlink channels are received through a spatial transmission filter used for receiving the first downlink reference signal; and/or receive the plurality of uplink channels that are sent by the terminal device through the spatial transmission filter used for receiving the first downlink reference signal.

With reference to any one of the fourth aspect or the first possible implementation of the fourth aspect, in a second possible implementation of the fourth aspect, the communication unit is further configured to: receive a beam failure recovery request that is sent by the terminal device through a first spatial transmission filter, where the first spatial transmission filter is determined by the terminal device by measuring a downlink reference signal associated with a candidate beam; and send a beam failure recovery request response to the terminal device, where the beam failure recovery request response is received through the first spatial transmission filter.

With reference to any one of the fourth aspect or the possible implementations of the fourth aspect, in a third possible implementation of the fourth aspect, the communication unit is further configured to: receive the plurality of uplink channels that are sent by the terminal device through the first spatial transmission filter; and/or send the plurality of downlink channels to the terminal device, where the plurality of downlink channels are received through the first spatial transmission filter.

With reference to any one of the fourth aspect or the possible implementations of the fourth aspect, in a fourth possible implementation of the fourth aspect, the beam failure recovery request response includes a second TCI, the second TCI includes information about a second uplink reference signal and/or information about a second downlink reference signal, a spatial transmission filter corresponding to the second uplink reference signal is used for sending the plurality of uplink channels, and the second downlink reference signal and the DMRSs of the plurality of downlink channels meet a QCL relationship.

With reference to any one of the fourth aspect or the possible implementations of the fourth aspect, in a fifth possible implementation of the fourth aspect, the communication unit is further configured to: receive the plurality of uplink channels that are sent by the terminal device through the spatial transmission filter corresponding to the second uplink reference signal; and/or send the plurality of downlink channels to the terminal device, where the plurality of downlink channels are received through the spatial transmission filter corresponding to the second uplink reference signal.

According to a fifth aspect, a communication apparatus is provided. The communication apparatus includes at least one processor and a memory. The at least one processor is coupled to the memory, and the memory is configured to store a computer program.

The at least one processor is configured to execute the computer program stored in the memory, to enable the apparatus to perform the method according to any one of the first aspect and the implementations of the first aspect, or perform the method according to any one of the second aspect and the implementations of the second aspect.

According to a sixth aspect, a computer-readable storage medium is provided. The computer-readable storage medium stores instructions. When the computer-readable storage medium runs on the communication apparatus according to any one of the third aspect and the implementations of the third aspect, the communication apparatus is enabled to perform the communication method according to any one of the first aspect and the implementations of the first aspect.

According to a aspect, a computer-readable storage medium is provided. The computer-readable storage medium stores instructions. When the computer-readable storage medium runs on the communication apparatus according to any one of the fourth aspect and the implementations of the fourth aspect, the communication apparatus is enabled to perform the communication method according to any one of the second aspect and the implementations of the second aspect.

According to a seventh aspect, a wireless communication apparatus is provided. The communication apparatus includes a processor, for example, used in the communication apparatus, to implement the method according to any one of the first aspect and the implementations of the first aspect. The communication apparatus may be, for example, a chip system. In a feasible implementation, the chip system further includes a memory, where the memory is configured to store program instructions and data that are necessary for implementing functions of the method according to the first aspect.

According to an eighth aspect, a wireless communication apparatus is provided. The communication apparatus includes a processor, for example, used in the communication apparatus, to implement the method according to any one of the second aspect and the implementations of the second aspect. The communication apparatus may be, for example, a chip system. In a feasible implementation, the chip system further includes a memory, where the memory is configured to store program instructions and data that are necessary for implementing functions of the method according to the second aspect.

The chip system in the foregoing aspects may be a system-on-a-chip (system-on-a-chip, SoC), a baseband chip, or the like, where the baseband chip may include a processor, a channel encoder, a digital signal processor, a modem, an interface module, and the like.

According to a ninth aspect, a communication system is provided. The communication system includes the access network device according to any one of the foregoing implementations and the terminal device according to any one of the foregoing implementations.

### BRIEF DESCRIPTION OF DRAWINGS

FIG. 1 is a diagram of an architecture of a communication system according to an embodiment of this application;
FIG. 2 is a schematic diagram of a beam failure according to an embodiment of this application;
FIG. 3 is a schematic diagram of a principle of a communication method according to an embodiment of this application;
FIG. 4a is a schematic diagram of a structure of a communication apparatus according to an embodiment of this application;
FIG. 4b is another schematic diagram of a structure of a communication apparatus according to an embodiment of this application;
FIG. 5 is a schematic flowchart of a communication method according to an embodiment of this application; and
FIG. 6 to FIG. 9 each are another block diagram of a structure of a communication apparatus according to an embodiment of this application.

### DESCRIPTION OF EMBODIMENTS

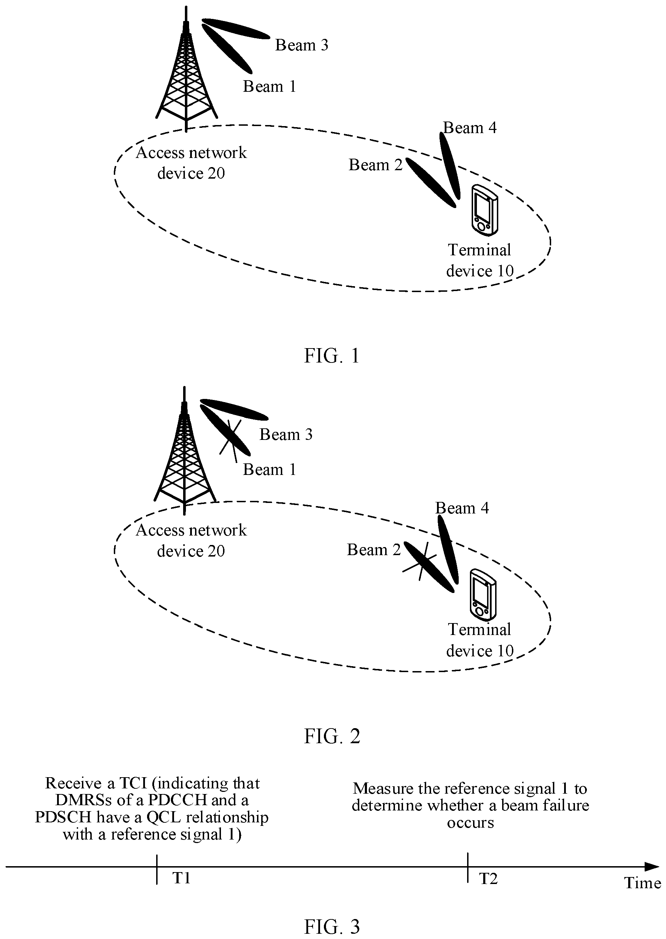

A method provided in embodiments of this application is applicable to a communication system shown in FIG. 1. As shown in FIG. 1, the communication system may include a terminal device 10 and an access network device 20.

The access network device may also be referred to as a radio access network device or a next-generation radio access network device. The terminal device 10 may communicate with the access network device 20 through a beam. For example, refer to FIG. 1. A beam 1 is aligned with a beam 2. The access network device 20 may send a PDCCH or a physical downlink shared channel (physical downlink shared channel, PDSCH) through the beam 1, and the terminal device 10 may receive the PDCCH or the PDSCH through the beam 2. A beam 3 is aligned with a beam 4. The terminal device 10 may send a physical uplink control channel (physical uplink control channel, PUCCH) or a physical uplink shared channel (physical uplink shared channel, PUSCH) through the beam 4, and the access network device may receive the PUCCH or the PUSCH through the beam 3.

Optionally, the communication system may further include a core network device (not shown in the figure), and the core network device may communicate with the access network device 20 through a next generation (next generation, NG) interface.

Optionally, the communication system may be a universal mobile telecommunications system (universal mobile telecommunications system, UMTS), a code division multiple access (code division multiple access, CDMA) system, a wireless local area network (wireless local area network, WLAN), a wideband code division multiple access (wideband code division multiple access, WCDMA) system, a long term evolution (long term evolution, LTE) system, an LTE frequency division duplex (frequency division duplex, FDD) system, a universal mobile telecommunications system (universal mobile telecommunications system, UMTS), a fifth-generation (fifth-generation, 5G) mobile communication technology communication system, another wireless communication system that uses an orthogonal frequency division multiplexing (orthogonal frequency division multiplexing, OFDM) technology, or the like. A specific type of the communication system is not limited in this application.

Optionally, the terminal device 10 in the communication system may also be referred to as UE, a mobile station (MS), a mobile terminal (MT), or the like. The terminal device 10 may be a device that provides voice and/or data connectivity for a user, for example, may be a mobile phone ("cellular" phone), a cell phone, a computer, a cordless phone, a session initiation protocol (session initiation protocol, SIP) phone, a wireless local loop (wireless local loop, WLL) station, a personal digital assistant (personal digital assistant, PDA), a laptop computer, a handheld communication device, a handheld computing device, a satellite wireless device, a wireless modem card, a television set-top box (set-top box, STB), customer premises equipment (customer premises equipment, CPE), a wearable device (for example, a smartwatch, a smart band, or a pedometer), an in-vehicle device (for example, a car, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a smart home device (for example, a refrigerator, a television, an air conditioner, or an electric meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot air balloon, an uncrewed aerial vehicle, or an airplane), or another device used for communication in a wireless system. A specific representation form of the terminal device310 is not limited in this application.

In some embodiments, the access network device 20 may be a next generation NodeB (next generation NodeB, gNB), an evolved NodeB (evolved NodeB, eNB), a next generation evolved NodeB (ng-eNB), a transmission reception point (transmission reception point, TRP), a radio network controller (radio network controller, RNC), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), a central unit (central unit, CU), a distributed unit (distributed unit, DU), a central unit-control plane (central unit-control plane, CU-CP), a central unit-user plane (central unit-user plane, CU-UP), or the like.

The gNB may provide a new radio (NR) control plane and/or user plane protocol and function for the terminal device 10, and access a 5G core network (5th generation core, 5GC).

The ng-eNB may provide an evolved universal terrestrial radio access (evolved universal terrestrial radio access, E-UTRA) control plane and/or user plane protocol and function for the terminal device 10, and access the 5GC.

The CU mainly includes an RRC layer, a service data adaptation protocol (service data adaptation protocol, SDAP) layer, and a packet data convergence protocol (packet data convergence protocol, PDCP) layer of the gNB, or an RRC layer and a PDCP layer of the ng-eNB.

The DU mainly includes a radio link control (radio link control, RLC) layer, a media access control (medium access control, MAC) layer, and a physical layer of the gNB or the ng-eNB.

The CU-CP mainly includes an RRC layer in a gNB-CU or a ng-eNB-CU and a control plane at the PDCP layer.

The CU-UP mainly includes an SDAP layer in the gNB-CU or the ng-eNB-CU and a user plane at the PDCP layer.

It may be understood that the communication system shown in FIG. 1 is merely intended to describe the technical solutions in embodiments of this application more clearly, and does not constitute a limitation on the technical solutions provided in embodiments of this application. For example, the communication system may further include another device, for example, a network control device. The network control device may be an operation, administration, and maintenance (operation administration and maintenance, OAM) system, which is also referred to as a network management system. The network control device may manage the access network device 20.

In addition, a person of ordinary skill in the art may learn that the technical solutions provided in embodiments of this application are also applicable to a similar technical problem as a network architecture evolves and a new service scenario emerges.

First, terms used in embodiments of this application are explained and described.

### (1) Beam (beam)

Beams are communication resources, and information may be sent or received through the beams. Specifically, one beam may correspond to one or more antenna ports, and is used for transmitting a data channel, a control channel, a sounding signal, and the like. For example, a transmit beam may be signal strength distribution formed in different directions in space after a signal is transmitted through an antenna, and a receive beam may be signal strength distribution, in different directions in space, of a radio signal received from an antenna. It may be understood that the one or more antenna ports forming the beam may be considered as an antenna port set. In a current 3GPP standard protocol, a protocol specification for a beam-related concept is mainly for determining a receiving behavior or a sending behavior of a terminal device, and ensuring that a network side (for example, a base station) and the terminal device maintain a consistent understanding on the receiving behavior and the sending behavior.

### (2) Spatial transmission filter (Spatial filter)

As specified in the 3GPP protocol Rel-15/Rel-16, the spatial transmission filter may indicate a group of communication parameters. The terminal device may send an uplink channel or an uplink signal through (or by using) the spatial transmission filter, and receive a downlink channel or a downlink signal through the spatial transmission filter.

### (3) Quasi co-location (quasi co-location, QCL)

A QCL relationship indicates that there are one or more same or similar communication features among a plurality of resources. For a plurality of resources having a quasi co-location relationship, same or similar communication configurations may be adopted. Specifically, signals corresponding to antenna ports that have a QCL relationship have a same parameter; or a parameter (which may also be referred to as a QCL parameter) of an antenna port may be for determining a parameter of another antenna port that has a QCL relationship with the antenna port; or two antenna ports have a same parameter; or a parameter difference between two antenna ports is lower than a threshold. The parameter may include one or more of the following: a delay spread (delay spread), a Doppler spread (Doppler spread), a Doppler shift (Doppler shift), an average delay (average delay), an average gain, and a spatial receive parameter (spatial Rx parameter). The spatial receive parameter may include one or more of the following: an angle of arrival (angle of arrival, AOA for short), an average AOA, an AOA spread, an angle of departure (angle of departure, AOD for short), an average angle of departure AOD, an AOD spread, a receive antenna spatial correlation parameter, a transmit antenna spatial correlation parameter, a transmit beam, a receive beam, and a resource identifier.

### (4) QCL parameter of an antenna port

The QCL parameter of the antenna port indicates that a DMRS of a channel sent through the antenna port and a reference signal meet a QCL relationship, or that a signal sent through the antenna port and a reference signal meet a QCL relationship.

### (5) Transmission configuration indicator (transmission configuration indicator, TCI)

The TCI may be QCL information of a channel. The QCL information may indicate a reference signal that meets a QCL relationship with a demodulation reference signal (demodulation reference signal, DMRS) of the channel or a signal. In this case, the terminal device may receive the channel or the signal by using a receive parameter that is the same as or similar to a receive parameter of the reference signal.

For example, the TCI indicates QCL information of a physical downlink control channel (physical downlink control channel, PDCCH) or a physical downlink shared channel (physical downlink shared channel, PDSCH), in other words, the TCI may indicate a reference signal or reference signals that meet a QCL relationship with a DMRS of the PDCCH/PDSCH. In this case, the terminal may receive the PDCCH/PDSCH by using a receive parameter that is the same as or similar to a receive parameter of the reference signal.

In a possible implementation, the TCI may specifically indicate a reference signal index, and the reference signal index indicates the reference signal that meets the QCL relationship with the DMRS of the PDCCH/PDSCH. The receive parameter may include a spatial parameter such as a receive beam.

### (6) Reference signal (reference signal, RS)

At a physical layer, uplink communication includes transmission of a physical uplink channel and an uplink signal. The physical uplink channel includes a random access channel (random access channel, PRACH), an uplink control channel (physical uplink control channel, PUCCH), an uplink data channel (physical uplink shared channel, PUSCH), and the like. The uplink signal includes a channel sounding signal SRS, an uplink control channel demodulation reference signal (PUCCH demodulation reference signal, PUCCH-DMRS), an uplink data channel demodulation reference signal PUSCH-DMRS, an uplink phase noise tracking signal (phase noise tracking reference signal, PTRS), an uplink positioning signal (uplink positioning RS), and the like. The uplink signal may be referred to as a reference signal.

Downlink communication includes transmission of a physical downlink channel and a downlink signal. The physical downlink channel includes a broadcast channel (physical broadcast channel, PBCH), a downlink control channel (physical downlink control channel, PDCCH), a downlink data channel (physical downlink shared channel, PDSCH), and the like. The downlink signal includes a primary synchronization signal (primary synchronization signal, PSS for short)/secondary synchronization signal (secondary synchronization signal, SSS), a downlink control channel demodulation reference signal PDCCH-DMRS, a downlink data channel demodulation reference signal PDSCH-DMRS, a phase noise tracking signal PTRS, a channel state information reference signal (channel state information reference signal, CSI-RS), a cell signal (Cell reference signal, CRS) (not available in NR), a fine synchronization signal (time/frequency tracking reference signal, TRS) (not available in LTE), an LTE/NR positioning signal (positioning RS), and the like. The downlink signal may be referred to as a reference signal.

### (7) Beam failure (beam failure)

Generally, the base station communicates with the UE through a beam pair, and the base station sends an electromagnetic wave signal in a form of a transmit beam. In a process in which the electromagnetic wave signal is propagated in the form of the beam in space, if the transmit beam is blocked by an object, a signal/channel transmitted through the beam cannot be correctly received by a receiving end, and the receiving end cannot continue communication through a paired receive beam within a specific period, and considers that a beam failure occurs.

In a possible implementation, the UE may measure a CSI-RS configured by the base station, to perform beam failure detection. For example, if measurement results of the CSI-RS are all lower than a threshold within a specific period, the UE may determine that a beam failure occurs.

In another possible implementation, if the base station does not configure a CSI-RS for the UE, the UE may detect a reference signal associated with a downlink receive beam, and determine, based on a measurement result, whether a beam failure occurs. The reference signal associated with the downlink receive beam and a DMRS of a downlink channel received through the downlink receive beam meet a QCL relationship, or the reference signal associated with the downlink receive beam and a downlink signal received through the downlink receive beam meet a QCL relationship.

For example, the UE may measure a reference signal associated with a downlink beam used for receiving a PDCCH. In other words, the UE may measure the reference signal that has a QCL relationship with a DMRS of the PDCCH. When measurement results are all lower than a threshold within a specific period, UE may determine that a beam failure occurs.

### (8) Beam failure recovery

The UE may maintain a candidate beam (referred to as q_1, or a candidate beam). When determining that a beam failure occurs, the UE may perform beam failure recovery, so that the UE determines a new beam (q_new) based on the candidate beam, to communicate with the base station. In the current 3GPP protocol version (Rel-16), the base station configures a maximum of two candidate beams for the UE. The UE measures the maximum of two candidate beams, and determines one candidate beam from the two candidate beams to attempt to perform beam failure recovery. After the UE receives a beam failure recovery response message sent by the base station, the candidate beam becomes the new beam.

For example, refer to FIG. 2. When the UE measures reference information associated with a beam 2, and determines, based on a measurement result, that a beam failure occurs, the UE switches to a candidate beam 4. The UE sends a beam failure recovery request to the base station through the beam 4. If the UE receives a beam failure recovery request response from the base station through the candidate beam 4, the UE may subsequently communicate with the base station through the candidate beam 4. Certainly, the base station switches to a beam 3 to communicate with the UE.

### (9) Common beam

In embodiments of this application, the common beam may be used for transmission of a plurality of channels or transmission of a plurality of signals. The plurality of channels or signals include at least two of a physical downlink control channel PDCCH, a physical downlink shared channel PDSCH, a downlink reference signal, a physical uplink control channel PUCCH, a physical uplink shared channel PUSCH, and a sounding reference signal SRS.

The common beam may be an uplink and downlink common beam, an uplink common beam, or a downlink common beam. The uplink and downlink common beam may be used for transmission of one or more uplink and downlink signals. For example, through a same beam, the UE may receive the PDCCH, the PDSCH, and the downlink reference signal, and send the PUCCH, the PUSCH, and the sounding reference signal SRS.

The uplink common beam may be used for transmission of a plurality of uplink signals. For example, the UE may send the PUCCH, the PUSCH, and the SRS through a same beam.

The downlink common beam may be used for transmission of a plurality of downlink signals. For example, the UE may receive the PDCCH, the PDSCH, and the downlink reference signal through a same beam.

The common beam may also be understood as a unified beam or a unified TCI (Unified TCI), and the common beam may also be understood as a joint TCI (Joint TCI).

A TCI defined in 3GPP Rel-15/Rel-16 indicates different downlink channels. For example, a PDCCH channel and a PDSCH channel are applicable to different TCI indication methods or signaling. An indication for uplink transmission is based on a spatial association relationship (Spatial relation). As the protocol evolves to the version Rel-17, a concept of the "common beam" starts to be discussed. The standard expects to use a unified configuration and/or indication manner, to simplify a protocol and signaling design, and to be used for beam indications for a plurality of scenarios, channels, signals, and the like.

After the common beam is introduced, how the terminal device performs beam failure detection is not clear. Currently, there is no technical solution in which the terminal device determines a beam used for beam failure detection in this scenario. For example, the base station configures a common TCI for the UE, and a source reference signal (source reference signal) in the TCI is an uplink reference signal. In a current technical solution, the terminal device cannot determine, based on the uplink reference signal, a downlink receive beam used for beam detection. The common TCI is applicable to a plurality of channels. The terminal device may determine a common beam based on the common TCI, and send a plurality of signals or a plurality of channels through the common beam (or a common spatial transmission filter).

In addition, it is assumed that the common beam indicated by the base station is used for downlink reception. When the terminal device determines that a beam failure occurs, how the terminal device performs beam failure recovery is not clear, and how the terminal device determines a new common beam is not clear. There is no technical solution in which the terminal device can perform beam failure recovery in this scenario.

In embodiments of this application, a TCI sent by the base station includes information about an uplink reference signal and/or information about a downlink reference signal. The downlink reference signal indicated by the TCI has a QCL relationship with DMRSs of a plurality of downlink channels, or has a QCL relationship with one or more downlink signals. The terminal device may determine a downlink receive beam failure detection reference signal based on a receive parameter of the downlink reference signal indicated by the TCI, and use the downlink receive beam failure detection reference signal as a beam used for beam failure detection. Alternatively, the terminal device uses the downlink reference signal indicated by the TCI as a beam used for beam failure detection. The terminal device measures the downlink reference signal indicated by the downlink TCI or a reference signal used for beam failure detection, and determines, based on a measurement result, whether a beam failure occurs. In a common beam scenario, the terminal device can perform beam failure detection.

Alternatively, a spatial transmission filter (namely, a spatial transmission filter used for receiving the uplink reference signal) corresponding to the uplink reference signal indicated by the TCI may be used for sending one or more uplink channels or signals, or may be used for receiving a plurality of downlink channels or signals. The terminal device may determine a downlink receive beam based on a transmit parameter of the uplink reference signal, and use the downlink receive beam as a beam used for beam failure detection. The terminal device measures a downlink reference signal associated with the downlink receive beam, and determines, based on a measurement result, whether a beam failure occurs. In a common beam scenario, the terminal device can perform beam failure detection.

For example, refer to FIG. 3. A TCI includes information about a downlink reference signal 1, and the downlink reference signal 1 and DMRSs of a PDCCH and a PDSCH meet a QCL relationship. The terminal device may determine that a receive parameter of the downlink reference signal 1 is a receive parameter of the PDCCH and the PDSCH, including a downlink receive beam 1. The terminal device may receive the PDCCH, the PDSCH, and a first reference signal by using a same or similar receive parameter.

The terminal device may further use the downlink receive beam 1 as a beam used for beam failure detection, and determine whether a downlink signal sent by an access network device can be received through the downlink receive beam 1. Specifically, a reference signal associated with the downlink receive beam 1 may be measured, to determine, based on a measurement result, whether a beam failure occurs. The reference signal associated with the downlink receive beam 1 and a DMRS of a downlink channel received through the downlink receive beam 1 meet a QCL relationship. For example, the reference signal associated with the downlink receive beam 1 is the downlink reference signal 1.

Alternatively, the TCI includes information about an uplink reference signal 1, and a spatial transmission filter corresponding to the uplink reference signal 1 may be used for sending a PUCCH and a PUSCH. The terminal device may further receive a downlink channel or a downlink signal through the spatial transmission filter corresponding to the uplink reference signal 1. In other words, a beam associated with the spatial transmission filter corresponding to the uplink reference signal 1 may be a downlink receive beam. The terminal device may measure a reference signal associated with the downlink receive beam, and determine, based on a measurement result, whether a beam failure occurs. The reference signal associated with the downlink receive beam may be a downlink reference signal received through the spatial transmission filter corresponding to the uplink reference signal 1.

It should be noted that, in descriptions of this application, words such as "first" and "second" are merely used for distinguishing and descriptions, and are not used to specially limit a feature. In descriptions of embodiments of this application, the term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of" means two or more.

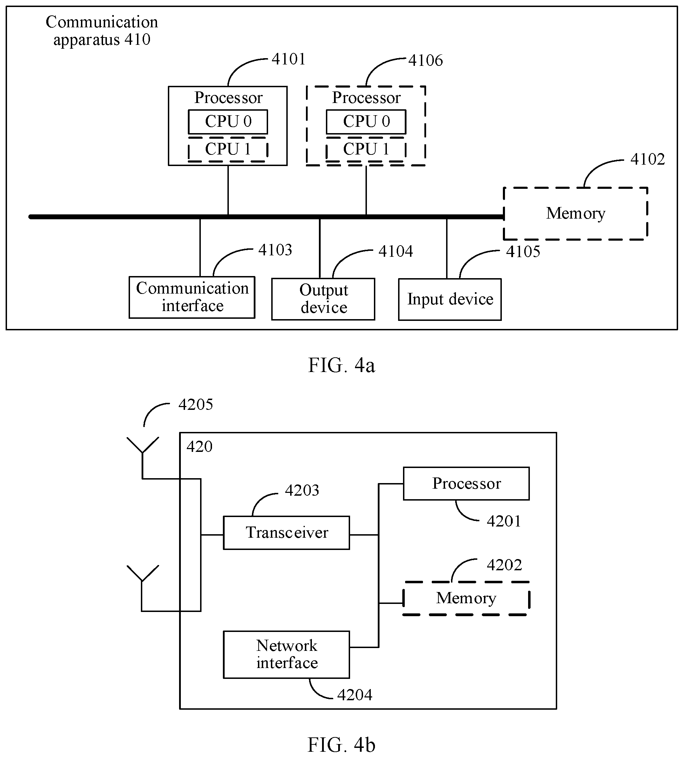

The terminal device in embodiments of this application may be implemented by using a communication apparatus 410 in FIG. 4a. FIG. 4a is a schematic diagram of a hardware structure of the communication apparatus 410 according to an embodiment of this application. The communication apparatus 410 includes a processor 4101 and at least one communication interface (in FIG. 4a, an example in which a communication interface 4103 is included is merely used for description), and optionally, further includes a memory 4102. The processor 4101, the memory 4102, and the communication interface 4103 are connected to each other.

The processor 4101 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication interface 4103 uses any apparatus such as a transceiver, to communicate with another device or a communication network, for example, the Ethernet, a radio access network (radio access network, RAN), or a wireless local area network (wireless local area network, WLAN).

The memory 4102 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. The memory may exist independently, or may be connected to the processor. The memory may alternatively be integrated with the processor.

The memory 4102 is configured to store computer-executable instructions for executing the solutions of this application, and the execution is controlled by the processor 4101. The processor 4101 is configured to execute the computer-executable instructions stored in the memory 4102, to implement the intent processing methods provided in the following embodiments of this application.

Optionally, the computer-executable instructions in embodiments of this application may also be referred to as application program code. This is not specifically limited in embodiments of this application.

During specific implementation, in an embodiment, the processor 4101 may include one or more CPUs, for example, a CPU 0 and a CPU 1 in FIG. 4a.

During specific implementation, in an embodiment, the communication apparatus 410 may include a plurality of processors such as the processor 4101 and a processor 4106 in FIG. 4a. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 410 may further include an output device 4104 and an input device 4105. The output device 4104 communicates with the processor 4101, and may display information in a plurality of manners. For example, the output device 4104 may be a liquid crystal display (liquid crystal display, LCD), a light emitting diode (light emitting diode, LED) display device, a cathode ray tube (cathode ray tube, CRT) display device, a projector (projector), or the like. The input device 4105 communicates with the processor 4101, and may receive an input from a user in a plurality of manners. For example, the input device 4105 may be a mouse, a keyboard, a touchscreen device, a sensor device, or the like.

The communication apparatus 410 may be a general-purpose device or a special-purpose device. During specific implementation, the communication apparatus 410 may be a desktop computer, a portable computer, a network server, a personal digital assistant (personal digital assistant, PDA), a mobile phone, a tablet computer, a wireless terminal apparatus, an embedded device, or a device having a structure similar to that in FIG. 4a. A type of the communication apparatus 410 is not limited in this embodiment of this application.

It should be noted that the communication apparatus 410 may be an entire terminal device, may be a part or component that implements a function of the terminal device, or may be a communication chip, for example, a baseband chip. When the communication apparatus 410 is an entire terminal device, the communication interface may be a radio frequency module. When the communication apparatus 410 is a communication chip, the communication interface 4103 may be an input/output interface circuit of the chip, where the input/output interface circuit is configured to read and output a baseband signal.

FIG. 4b is a schematic diagram of a structure of a communication apparatus. The communication apparatus 420 may be the network device in embodiments of this application, for example, an AMF or an SMF.

The communication apparatus includes at least one processor 4201, at least one transceiver 4203, at least one network interface 4204, and one or more antennas 4205. Optionally, the communication apparatus further includes at least one memory 4202. The processor 4201, the memory 4202, the transceiver 4203, and the network interface 4204 are connected, for example, through a bus. The antenna 4205 is connected to the transceiver 4203. The network interface 4204 is configured to enable the communication apparatus to connect to another communication device through a communication link. For example, the communication apparatus is connected to a core network element through an S1 interface. In this embodiment of this application, the connection may include various types of interfaces, transmission lines, buses, or the like. This is not limited in this embodiment.

In this embodiment of this application, the processor such as the processor 4201 may include at least one of the following types: a general-purpose central processing unit (Central Processing Unit, CPU), a digital signal processor (Digital Signal Processor, DSP), a microprocessor, an application-specific integrated circuit (Application-Specific Integrated Circuit, ASIC), a microcontroller unit (Microcontroller Unit, MCU), a field programmable gate array (Field Programmable Gate Array, FPGA), or an integrated circuit configured to implement a logical operation. For example, the processor 4201 may be a single-core (single-CPU) processor or a multi-core (multi-CPU) processor. The at least one processor 4201 may be integrated into one chip or located on a plurality of different chips.

In this embodiment of this application, the memory such as the memory 4202 may include at least one of the following types: a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically erasable programmable read-only memory, EEPROM). In some scenarios, the memory may alternatively be a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium, another magnetic storage device, or any other medium that can be used to carry or store expected program code in a form of instructions or a data structure and that can be accessed by a computer, but is not limited thereto.

The memory 4202 may exist independently, and is connected to the processor 4201. Optionally, the memory 4202 may alternatively be integrated with the processor 4201, for example, integrated into one chip. The memory 4202 can store program code for executing the technical solutions in embodiments of this application, and the processor 4201 controls the execution. Various types of executed computer program code may also be considered as drivers of the processor 4201. For example, the processor 4201 is configured to execute the computer program code stored in the memory 4202, to implement the technical solutions in embodiments of this application.

The transceiver 4203 may be configured to support receiving or sending of a radio frequency signal between the communication apparatus and a terminal device, and the transceiver 4203 may be connected to the antenna 4205. Specifically, the one or more antennas 4205 may receive a radio frequency signal. The transceiver 4203 may be configured to: receive the radio frequency signal from the antenna, convert the radio frequency signal into a digital baseband signal or a digital intermediate frequency signal, and provide the digital baseband signal or the digital intermediate frequency signal for the processor 4201, so that the processor 4201 further processes the digital baseband signal or the digital intermediate frequency signal, for example, performs demodulation processing and decoding processing. In addition, the transceiver 4203 may be configured to: receive a modulated digital baseband signal or digital intermediate frequency signal from the processor 4201, convert the modulated digital baseband signal or digital intermediate frequency signal into a radio frequency signal, and send the radio frequency signal through the one or more antennas 4205. Specifically, the transceiver 4203 may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transceiver 4203 may selectively perform one or more levels of frequency up-mixing processing and digital-to-analog conversion processing on the modulated digital baseband signal or digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal. The transceiver may be referred to as a transceiver circuit, a transceiver unit, a transceiver component, a sending circuit, a sending unit, a sending component, or the like.

It should be noted that the communication apparatus 420 may be an entire communication apparatus, may be a part or component that implements a function of the communication apparatus, or may be a communication chip. When the communication apparatus 420 is a communication chip, the transceiver 4203 may be an interface circuit of the chip, where the interface circuit is configured to read and output a baseband signal.

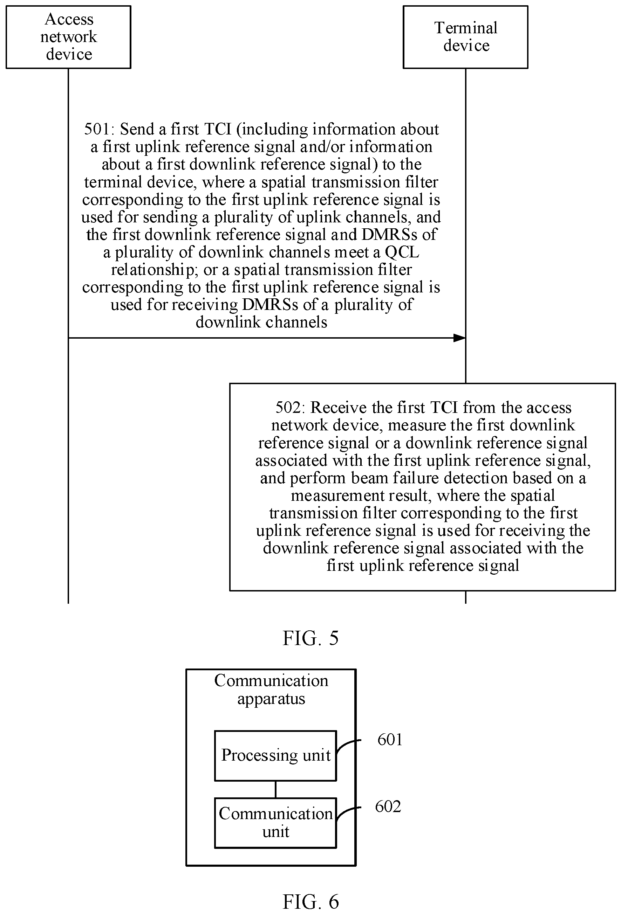

An embodiment of this application provides a communication method. As shown in FIG. 5, the method includes the following steps.

501: An access network device sends a first TCI to a terminal device, where the first TCI includes a signal of a first uplink reference signal and/or information about a first downlink reference signal. A spatial transmission filter corresponding to the first uplink reference signal is used for sending a plurality of uplink channels, and the first downlink reference signal and DMRSs of a plurality of downlink channels meet a QCL relationship; or a spatial transmission filter corresponding to the first uplink reference signal is used for receiving DMRSs of a plurality of downlink channels.

The spatial transmission filter corresponding to the first uplink reference signal may be a spatial transmission filter used for sending the first uplink reference signal. The spatial transmission filter corresponding to the first uplink reference signal may be further used for sending a plurality of uplink signals, and the first downlink reference signal and a plurality of downlink signals may further meet a QCL relationship.

The solution provided in this embodiment of this application is applicable to a common beam scenario. The access network device may send information about a downlink reference signal to the terminal device, to indicate that the DMRSs of the plurality of downlink channels and the reference signal meet a QCL relationship, so that the terminal device transmits a plurality of channels or signals through a same beam. Alternatively, the access network device may send information about an uplink reference signal to the terminal device, to indicate the terminal device to transmit a plurality of channels or signals through a spatial transmission filter used for sending the uplink reference signal. Alternatively, the access network device may send information about an uplink reference signal to the terminal device, to indicate the terminal device to determine, by receiving a downlink reference signal associated with the uplink reference signal, that the DMRSs of the plurality of downlink channels and the downlink reference signal meet a QCL relationship.

During specific implementation, there may be the following three possible implementations for a TCI (for example, the first TCI) sent by the access network device.

In a first implementation, the TCI includes information about a downlink reference signal, for example, includes the information about the first downlink reference signal, where the information about the downlink reference signal may be a configuration index of the downlink reference signal. The access network device sends the information about the downlink reference signal to the terminal device, to indicate that the DMRSs of the plurality of downlink channels and the downlink reference signal meet a QCL relationship.

Further, the terminal device may be indicated to receive the plurality of downlink signals or the plurality of downlink channels by using a receive parameter of the downlink reference signal, or receive the plurality of downlink signals or the plurality of downlink channels through a spatial transmission filter used for receiving the downlink reference signal, or receive the plurality of downlink signals or the plurality of downlink channels by using QCL parameters/a QCL parameter of a same antenna port and/or a same antenna panel used for receiving the downlink reference signal.

In a possible implementation, the TCI may further indicate the terminal device to determine a transmit parameter of the plurality of uplink signals or the plurality of downlink channels based on the receive parameter of the downlink reference signal, or send the plurality of uplink signals or the plurality of uplink channels through the spatial transmission filter used for receiving the downlink reference signal, or send the plurality of uplink signals or the plurality of uplink channels by using the QCL parameters/QCL parameter of the same antenna port and/or the same antenna panel for the downlink reference signal.

For example, the TCI includes information about a downlink reference signal 1, and indicates that DMRSs of a PDCCH and a PDSCH and the downlink reference signal 1 meet a QCL relationship. The terminal device may receive the PDCCH and the PDSCH by using a receive parameter of the downlink reference signal 1, or receive the PDCCH and the PDSCH through a spatial transmission filter used for receiving the downlink reference signal 1, or receive the PDCCH and the PDSCH by using QCL parameters/a QCL parameter of a same antenna port and/or a same antenna panel for the downlink reference signal 1.

Optionally, the terminal device may determine a transmit parameter of a PUCCH and a PUSCH based on the receive parameter of the downlink reference signal 1, or send a PUCCH and a PUSCH through the spatial transmission filter used for receiving the downlink reference signal 1, or send a PUCCH and a PUSCH by using the QCL parameters/QCL parameter of the same antenna port and/or the same antenna panel for the downlink reference signal 1.

In a second implementation, the TCI includes information about an uplink reference signal, for example, includes the information about the first uplink reference signal, where the information about the uplink reference signal may be a resource index of the uplink reference signal. The access network device sends the TCI to indicate the terminal device to send the plurality of uplink channels or the plurality of uplink signals through a spatial transmission filter used for sending the uplink reference signal.

Specifically, the terminal device is indicated to send the plurality of uplink signals or the plurality of uplink channels by using a transmit parameter of the uplink reference signal, or send the plurality of uplink signals or the plurality of uplink channels through the spatial transmission filter used for sending the uplink reference signal, or send the plurality of uplink signals or the plurality of uplink channels by using QCL parameters/a QCL parameter of a same antenna port and/or a same antenna panel for the uplink reference signal, or the terminal device is indicated that the uplink reference signal has a spatial relation (Spatial relation) with the plurality of uplink signals or the plurality of uplink channels, so that the terminal device determines a parameter used for sending the plurality of uplink signals or the plurality of uplink channels.

In a possible implementation, the TCI may further indicate the terminal device to determine a receive parameter of the plurality of downlink signals or the plurality of downlink channels based on the transmit parameter of the uplink reference signal, or receive the plurality of downlink signals or the plurality of downlink channels through the spatial transmission filter used for sending the uplink reference signal, or receive the plurality of downlink signals or the plurality of downlink channels by using the QCL parameters/QCL parameter of the same antenna port and/or the same antenna panel for the uplink reference signal.

For example, the TCI includes information about an uplink reference signal 1, and indicates the terminal device to send a PUCCH and a PUSCH through a spatial transmission filter used for sending the uplink reference signal 1, or indicates the terminal device to send a PUCCH and a PUSCH by using a transmit parameter of the uplink reference signal 1, or indicates the terminal device to send a PUCCH and a PUSCH by using QCL parameters/a QCL parameter of a same antenna port and/or a same antenna panel for the uplink reference signal 1.

Optionally, the terminal device may further determine a receive parameter of a PDCCH and a PDSCH based on the transmit parameter of the uplink reference signal 1, or receive a PDCCH and a PDSCH through the spatial transmission filter used for sending the uplink reference signal 1, or receive a PDCCH and a PDSCH by using the QCL parameters/QCL parameter of the same antenna port and/or the same antenna panel for the uplink reference signal 1.

In a third implementation, the TCI includes information about a downlink reference signal and information about an uplink reference signal, and indicates that the DMRSs of the plurality of downlink channels and the downlink reference signal meet a QCL relationship, and a spatial transmission filter corresponding to the uplink reference signal is used for sending the plurality of uplink channels or the plurality of uplink signals.

For example, the TCI includes information about an uplink reference signal 1 and information about a downlink reference signal 1, and indicates the terminal device to send a PUCCH and a PUSCH through a spatial transmission filter used for sending the uplink reference signal 1, or indicates the terminal device to send a PUCCH and a PUSCH by using a transmit parameter of the uplink reference signal 1, or indicates the terminal device to send a PUCCH and a PUSCH by using QCL parameters/a QCL parameter of a same antenna port and/or a same antenna panel for the uplink reference signal 1.

The terminal device may further determine a receive parameter of a PDCCH and a PDSCH based on a receive parameter of the downlink reference signal 1, or receive a PDCCH and a PDSCH through a spatial transmission filter used for receiving the downlink reference signal 1, or receive a PDCCH and a PDSCH by using QCL parameters/a QCL parameter of a same antenna port and/or a same antenna panel for the downlink reference signal 1.

Specifically, the access network device may send the TCI to the terminal device, and indicate the uplink reference signal and/or the downlink reference signal by using the TCI. The access network device sends a TCI configuration to the terminal device by using radio resource control (radio resource control, RRC) signaling, and may further activate or indicate a specific TCI index by using a MAC CE and/or DCI signaling.

502: The terminal device receives the first TCI from the access network device, measures the first downlink reference signal or a downlink reference signal associated with the first uplink reference signal, and performs beam failure detection based on a measurement result, where the spatial transmission filter corresponding to the first uplink reference signal is used for receiving the downlink reference signal associated with the first uplink reference signal.

In step 502, the terminal device performs beam failure detection based on the first TCI sent by the access network device. A specific procedure includes the following S1 and S2.

S1: Determine, based on the first TCI, a downlink receive beam (referred to as a first beam below) used for beam failure detection.

During specific implementation, the terminal device may determine, based on information in the first TCI, a receive parameter used for receiving a downlink channel or signal, or determine, based on information in the first TCI, a spatial transmission filter used for receiving a downlink channel or signal, or determine, based on information in the first TCI, a QCL parameter of an antenna port used for receiving a downlink channel or signal. In this way, downlink receive beams can be determined based on the receive parameter of the downlink channel or signal, the spatial transmission filter used for receiving the downlink channel or signal, or QCL parameters/a QCL parameter of a same antenna port and/or a same antenna panel used for receiving the downlink channel or signal. Further, the terminal device may further determine, from the determined downlink receive beams, the downlink receive beam used for beam failure detection.

Different from different information in the first TCI, the terminal device may specifically determine, in the following three manners, the downlink receive beam used for beam failure detection.

In a first implementation, the first TCI includes the information about the first downlink reference signal, and the terminal device determines that the DMRSs of the plurality of downlink channels and the first downlink reference signal meet the QCL relationship, and may determine, based on the first downlink reference signal, the downlink receive beam used for beam failure detection.

For example, based on the information about the first downlink reference signal in the first TCI, the terminal device may receive the PDCCH and the PDSCH based on a receive parameter of the first downlink reference signal, or receive the PDCCH and the PDSCH through a spatial transmission filter used for receiving the first downlink reference signal, or receive the PDCCH and the PDSCH by using QCL parameters/a QCL parameter of a same antenna port and/or a same antenna panel used for receiving the first downlink reference signal. The terminal device may further determine a downlink receive beam of the PDCCH and the PDSCH based on the receive parameter of the first downlink reference signal, the spatial transmission filter used for receiving the first downlink reference signal, or the QCL parameters/QCL parameter of the same antenna port and/or the same antenna panel used for receiving the first downlink reference signal. The terminal device may use the downlink receive beam of the PDCCH and the PDSCH as beams used for beam failure detection.

In a second implementation, the first TCI includes the information about the first uplink reference signal, and the terminal device may determine, based on the first uplink reference signal, the downlink receive beam used for beam failure detection.

For example, according to an indication of the first TCI, the terminal device may determine a receive parameter of the PDCCH and the PDSCH based on a transmit parameter of the first uplink reference signal, or receive the PDCCH and the PDSCH through the spatial transmission filter used for sending the first uplink reference signal, or receive the PDCCH and the PDSCH by using QCL parameters/a QCL parameter of a same antenna port and/or a same antenna panel used for sending the first downlink reference signal. The terminal device may further determine a downlink receive beam of the PDCCH and the PDSCH based on the receive parameter of the PDCCH and the PDSCH, the spatial transmission filter used for receiving the PDCCH and the PDSCH, or the QCL parameter of the antenna port used for receiving the PDCCH and the PDSCH. The terminal device may use the downlink receive beam of the PDCCH and the PDSCH as beams used for beam failure detection.

In a third implementation, the first TCI includes the information about the first uplink reference signal and the information about the first downlink reference signal, and the terminal device may determine, based on the first downlink reference signal, the downlink receive beam used for beam failure detection. For details, refer to the foregoing second implementation. Details are not described herein again. In addition, optionally, the terminal device may determine, based on the information about the first uplink reference signal, to send a beam failure recovery request.

In a possible implementation, during the beam failure detection, a receive beam of a downlink control channel is preferred over a receive beam of a downlink data channel, and the receive beam of the downlink control channel is preferentially used as the beam used for beam failure detection.

For example, a common beam indicated by the TCI is used for receiving the PDSCH and sending one or more uplink channels. For example, the TCI includes information about a downlink reference signal, and the terminal device receives the PDSCH based on a receive parameter of the downlink reference signal, and may further determine a transmit parameter of the one or more uplink channels based on the receive parameter of the downlink reference signal. Alternatively, the PDSCH is received and one or more uplink channels are sent through a spatial transmission filter used for receiving the downlink reference signal.

The terminal device determines a receive parameter of the PDCCH, or determines a spatial transmission filter used for receiving the PDCCH, to determine a downlink receive beam of the PDCCH, and use the downlink receive beam of the PDCCH as the beam used for beam failure detection.

S2: Measure a downlink reference signal (referred to as a target downlink reference signal below) associated with the first beam, and determine, based on a measurement result, whether a beam failure occurs.

Specifically, the downlink reference signal associated with the first beam may be considered as a downlink reference signal used for beam failure detection. The terminal device measures the downlink reference signal, and may determine, based on the measurement result, whether the beam failure occurs. In addition, an association relationship between the first beam and the target downlink reference signal may be understood as follows: A DMRS of a downlink channel received through the first beam and the target downlink reference signal meet a QCL relationship, or a spatial transmission filter used for receiving the target downlink reference signal corresponds to the first beam, or a receive parameter of the target downlink reference signal includes the first beam.

Different from different content of the TCI, the terminal device may determine the target downlink reference signal in the following three possible implementations.

In a first implementation, the TCI includes only the information about the first downlink reference signal, and the TCI may indicate a downlink common beam. To be specific, the terminal device receives the plurality of downlink channels by using the receive parameter of the first downlink reference signal, or receives the plurality of downlink channels through the spatial transmission filter used for receiving the first downlink reference signal, or receives the plurality of downlink channels by using the QCL parameters/QCL parameter of the same antenna port and/or the same antenna panel used for receiving the first downlink reference signal.

The downlink common beam may be used for beam failure detection, namely, the first beam described above. A DMRS of a downlink channel received through the downlink common beam and the first downlink reference signal meet a QCL relationship, or the spatial transmission filter used for receiving the first downlink reference signal corresponds to the downlink common beam, or the receive parameter of the first downlink reference signal includes the downlink common beam. Based on this, the downlink reference signal associated with the first beam is the first reference signal.

In a second implementation, the TCI includes only the information about the first uplink reference signal. The terminal device may determine a receive parameter of the plurality of downlink channels based on the transmit parameter of the first uplink reference signal, or receive the plurality of downlink channels through the spatial transmission filter used for sending the first uplink reference signal, or receive the plurality of downlink channels by using the QCL parameters/QCL parameter of the same antenna port and/or the same antenna panel used for sending the first uplink reference signal.

The terminal device may further determine, based on the transmit parameter of the first uplink reference signal, the downlink reference signal (referred to as a downlink reference signal s for short below) associated with the first uplink reference signal, or receive the downlink reference signal s through the spatial transmission filter used for sending the first uplink reference signal, or receive the downlink reference signal s by using the QCL parameters/QCL parameter of the same antenna port and/or the same antenna panel used for sending the first uplink reference signal.

It may be understood that the downlink receive beam may be determined based on the receive parameter, the spatial transmission filter, or the QCL parameter of the antenna port, and the downlink receive beam may be used for beam failure detection, namely, the first beam described above. With reference to the foregoing descriptions, the downlink reference signal s is the downlink reference signal associated with the first beam.

To be specific, when the TCI includes only the information about the first uplink reference signal, the downlink reference signal associated with the first beam is the downlink reference signal s associated with the first uplink reference signal, and the spatial transmission filter used for sending the first uplink reference signal may be used for receiving the downlink reference signal s.

In a specific implementation, if the measurement result of the target downlink reference signal is lower than a corresponding threshold within a period, it is determined that the beam failure occurs. Otherwise, it is determined that no beam failure occurs.

For example, the first downlink reference signal is measured. If the measurement result is lower than a corresponding threshold within a period, it is determined that a beam failure occurs. Otherwise, it is determined that no beam failure occurs.

Alternatively, the downlink reference signal s associated with the first uplink reference signal is measured. If a measurement result is lower than a corresponding threshold within a period, it is determined that a beam failure occurs. Otherwise, it is determined that no beam failure occurs.

It should be noted that in a conventional technology, there is no beam failure detection solution in a common beam scenario. In the method shown in FIG. 5, when the access network device indicates the common beam by using the TCI, the terminal device may determine the downlink receive beam used for beam failure detection, to perform beam failure detection.

Optionally, the method shown in FIG. 5 further includes: When the TCI includes the information about the first uplink reference signal, the terminal device may determine the common beam based on the information about the first uplink reference signal. For example, the terminal device sends the plurality of uplink channels through the spatial transmission filter corresponding to the first uplink reference signal, and/or receives the plurality of downlink channels through the spatial transmission filter corresponding to the first uplink reference signal.

When the TCI includes the information about the first downlink reference signal, the terminal device may determine the common beam based on the information about the first uplink reference signal. For example, the plurality of downlink channels are received through the spatial transmission filter used for receiving the first downlink reference signal, and/or the plurality of uplink channels are sent through the spatial transmission filter used for receiving the first downlink reference signal.

Optionally, the method shown in FIG. 5 further includes: After determining that the beam failure occurs, the terminal device may further determine a new beam (for example, q_new) based on a candidate beam (for example, q_1 or a beam in the candidate beam), and subsequently communicate with the access network device through q_new. The terminal device may further use q_new as the common beam, update the currently activated first TCI to a TCI (referred to as a third TCI for short below) associated with q_new, deactivate the current common TCI (namely, the first TCI), and activate the third TCI as a new common TCI. The terminal device may determine the common beam based on the third TCI, for example, an uplink common beam, a downlink common beam, or an uplink and downlink common beam.

Specifically, the following steps a1 to a5 are included.

Step a1: The terminal device determines, based on the measurement result of the first downlink reference signal or the measurement result of the first uplink reference signal, that the beam failure occurs, and measures a downlink reference signal associated with the candidate beam.

Specifically, when the measurement result is continuously lower than the threshold, it is determined that the beam failure occurs, and the terminal device cannot receive, through the common beam indicated by the currently activated first TCI, a downlink signal sent by the access network device. The terminal device needs to measure the downlink reference signal associated with the candidate beam, to send the beam failure recovery request through an appropriate spatial transmission filter.

For example, the terminal device attempts to receive, through different spatial transmission filters, the downlink reference signal (referred to as a downlink reference signal x for short below) associated with the candidate beam, and measures receive quality values of the downlink reference signal received through the different spatial transmission filters.

Step a2: The terminal device determines, based on measurement results of the downlink reference signal associated with the candidate beam, a parameter of a first spatial transmission filter used for sending the beam failure recovery request.

Specifically, the terminal device measures, in step a1, the downlink reference signal received through the different spatial transmission filters, and determines a spatial transmission filter corresponding to an optimal measurement result (namely, a highest receive quality value), for example, the first spatial transmission filter described in this embodiment of this application. The terminal device may further send the beam failure recovery request through the spatial transmission filter. The first spatial transmission filter corresponds to q_new, and the terminal device may subsequently communicate with a base station through q_new.

Step a3: The terminal device sends the beam failure recovery request to the access network device through the first spatial transmission filter.

Specifically, the terminal device may send the beam failure recovery request by using QCL parameters/a QCL parameter of a same antenna port and/or a same antenna panel used for receiving the downlink reference signal x.

Step a4: The terminal device receives a beam failure recovery request response from the access network device through the first spatial transmission filter.

Step a5: The terminal device sends the plurality of uplink channels through the first spatial transmission filter, and/or receives the plurality of downlink channels through the first spatial transmission filter.

Specifically, when receiving the beam failure recovery request response from the access network device through the first spatial transmission filter, the terminal device may learn that the access network device has acknowledged that the currently activated first TCI becomes invalid, and the access network device allows activation of the TCI associated with q_new. In this case, the terminal device determines the common beam based on the TCI associated with q_new. For example, the plurality of uplink channels may be sent through the first spatial transmission filter, and/or the plurality of downlink channels may be received through the first spatial transmission filter.

For example, the terminal device updates the activated first TCI to the third TCI associated with q_new. The third TCI may be used as a downlink common TCI, in other words, q_new may be used as a downlink common beam.

Alternatively, the third TCI may be used as a common TCI of a downlink control channel, in other words, q_new is used as a common beam of the downlink control channel.

Alternatively, the terminal uses q_new as a downlink common beam, and uses a beam used for sending a PRACH as an uplink common beam.

Optionally, the method shown in FIG. 5 further includes: After determining that the beam failure occurs, the terminal device receives a common TCI (for example, a second TCI in this embodiment of this application) updated by the access network device, updates the currently activated first to the second TCI, and determines the common beam based on the second TCI, for example, an uplink common beam, a downlink common beam, or an uplink and downlink common beam.

Specifically, the following steps b1 to b4 are included.

Steps b1 to b3 are the same as steps a1 to a3 described above, and details are not described herein again.

Step b4: The terminal device receives the beam failure recovery request response from the access network device through the first spatial transmission filter, where the beam failure recovery request response includes the second TCI.

The second TCI is a common TCI, and may indicate the common beam. For example, the second TCI includes information about a second uplink reference signal and/or information about a second downlink reference signal, a spatial transmission filter corresponding to the second uplink reference signal is used for sending the plurality of uplink channels, and the second downlink reference signal and the DMRSs of the plurality of downlink channels meet a QCL relationship.

Specifically, when receiving the beam failure recovery request response from the access network device through the first spatial transmission filter, the terminal device may learn that the access network device has acknowledged that the currently activated first TCI becomes invalid, and the access network device allows activation of the second TCI. In this case, the terminal device determines the common beam based on the second TCI.

Specifically, when the second TCI includes the information about the second uplink reference signal, the terminal device sends the plurality of uplink channels through the spatial transmission filter corresponding to the second uplink reference signal, and/or receives the plurality of downlink channels through the spatial transmission filter corresponding to the second uplink reference signal.

When the second TCI includes the information about the second downlink reference signal, the terminal device may receive the plurality of downlink channels through a spatial transmission filter used for receiving the second downlink reference signal, and/or send the plurality of uplink channels through the spatial transmission filter used for receiving the second downlink reference signal.

In a possible implementation, the second TCI indicates an uplink common beam, and the terminal device may send the PUCCH and the PUSCH through the common beam, and receive the PDCCH through q_new.

For example, the second TCI includes the information about the second uplink reference signal. The terminal device may send the PUCCH and the PUSCH through the spatial transmission filter used for sending the second uplink reference signal, and receive the PDCCH through a spatial transmission filter associated with q_new.

Specifically, the terminal device assumes that a beam/parameter/spatial transmission filter used for receiving the PDCCH is the same as QCL parameters/a QCL parameter of a same antenna port and/or a same antenna panel used for receiving a reference signal associated with q_new.

In another possible implementation, the second TCI indicates a downlink common beam. The terminal device may receive the PDCCH and the PDSCH through the common beam, and send the PUCCH through the beam used for sending the PRACH.

For example, the second TCI includes the information about the second downlink reference signal, and the terminal device may receive the PDCCH and the PDSCH through the spatial transmission filter used for receiving the second downlink reference signal, and send the PUCCH through a spatial transmission filter used for sending the PRACH.

In another possible implementation, the second TCI indicates an uplink and downlink common beam, and the uplink and downlink common beam may be used for receiving the PDCCH and the PDSCH and sending the PUCCH and the PUSCH.

For example, the second TCI includes the information about the second uplink reference signal, and the terminal device may send the PUCCH and/or the PUSCH through the spatial transmission filter used for sending the second uplink reference signal, and receive the PDCCH and/or the PDSCH through the spatial transmission filter used for sending the second uplink reference signal.

Alternatively, the second TCI includes the information about the second downlink reference signal, and the terminal device may send the PUCCH and/or the PUSCH through the spatial transmission filter used for receiving the second downlink reference signal, and receive the PDCCH and/or the PDSCH through the spatial transmission filter used for receiving the second downlink reference signal.

In another possible implementation, the common beam is used only for some channels. The terminal device transmits, based on the TCI, a channel that supports the common beam. For a channel that does not support the common beam, the terminal device receives a downlink channel by using a receive parameter used for receiving a reference signal indicated by q_new (where the receive parameter is used for receiving the reference signal indicated by q_new), or receives a downlink channel through a spatial transmission filter associated with a reference signal indicated by q_new. Alternatively, the terminal device may receive a downlink channel by using QCL parameters/a QCL parameter of a same antenna port and/or a same antenna panel used for receiving a reference signal indicated by q_new. The terminal device sends an uplink channel through a transmit beam of the PRACH, or sends an uplink channel through a spatial transmission filter associated with a transmit beam of the PRACH.

In a specific implementation, after a period after the terminal device receives the beam failure recovery request response, the terminal device enables the second TCI to become valid. For example, after 28 symbols after the terminal device receives the beam failure recovery request response, the second TCI becomes valid.

According to the method provided in embodiments of this application, the terminal device may update the common beam after the beam failure occurs on the common beam indicated by the currently activated common TCI, and the terminal device may perform communication through the new common beam as soon as possible, thereby improving communication performance.

When each functional module is obtained through division based on each corresponding function, FIG. 6 is a possible schematic diagram of a structure of the communication apparatus in the foregoing embodiments. The communication apparatus shown in FIG. 6 may be the access network device in embodiments of this application, may be a component that is in the access network device and that implements the foregoing method, or may be a chip used in the access network device. The chip may be a system-on-a-chip (System-On-a-Chip, SoC), a baseband chip with a communication function, or the like. As shown in FIG. 6, the communication apparatus includes a processing unit 601 and a communication unit 602. The processing unit may be one or more processors, and the communication unit may be a transceiver or a communication interface.

The processing unit 601 may be configured to support the communication apparatus in performing the processing actions in the foregoing method embodiments. Specifically, the processing unit 601 may perform the processing actions performed by the access network device in the method shown in FIG. 5. For example, the processing unit 601 may be configured to support the access network device in generating a TCI, and/or may be configured to perform another process of the technology described in this specification.

The communication unit 602 is configured to support communication between the access network device and another communication apparatus, and may specifically perform a sending action and/or a receiving action performed by the access network device in FIG. 5, for example, support the access network device in performing step 903 and step 501, and/or another process of the technology described in this specification.

It should be noted that all related content of the steps in the foregoing method embodiments may be cited in function description of corresponding functional modules. Details are not described herein again.

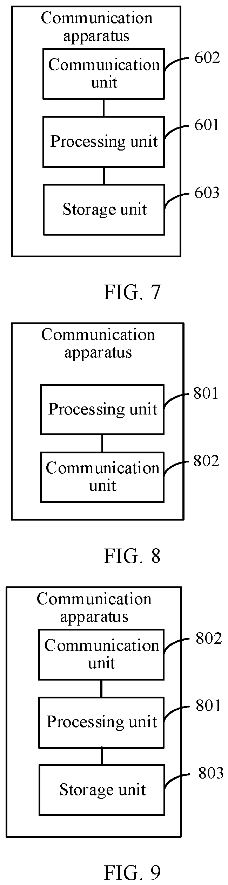

As shown in FIG. 7, the communication apparatus may further include a storage unit 603, and the storage unit 603 is configured to store program code and/or data of the communication apparatus.

The processing unit 601 may include at least one processor. The communication unit 602 may be a transceiver or a communication interface. The storage unit 603 may include a memory.

When each functional module is obtained through division based on each corresponding function, FIG. 8 is a possible schematic diagram of a structure of the communication apparatus in the foregoing embodiments. The communication apparatus shown in FIG. 8 may be the terminal device in embodiments of this application, may be a component that is in the terminal device and that implements the foregoing method, or may be a chip used in the terminal device. The chip may be a system-on-a-chip (System-On-a-Chip, SoC), a baseband chip with a communication function, or the like. As shown in FIG. 8, the communication apparatus includes a processing unit 801 and a communication unit 802. The processing unit 801 may be one or more processors, and the communication unit 802 may be a transceiver or a communication interface.

The processing unit 801 may be configured to support the communication apparatus in performing the processing actions in the foregoing method embodiments. Specifically, the processing unit 801 may perform the processing actions performed by the terminal device in the method shown in FIG. 5. For example, the processing unit 801 is configured to support the terminal device in performing beam failure detection in step 502, and/or is configured to perform another process of the technology described in this specification.

The communication unit 802 is configured to support communication between the terminal device and another communication apparatus, and may specifically perform a sending action and/or a receiving action performed by the terminal device in FIG. 5. For example, the communication unit 802 is configured to support the terminal device in performing the operation of receiving the first TCI in step 502, and/or is configured to perform another process of the technology described in this specification.

It should be noted that all related content of the steps in the foregoing method embodiments may be cited in function description of corresponding functional modules. Details are not described herein again.

As shown in FIG. 9, the communication apparatus may further include a storage unit 803, and the storage unit 803 is configured to store program code and/or data of the communication apparatus.

The processing unit 801 may include at least one processor. The communication unit 802 may be a transceiver or a communication interface. The storage unit 803 may include at least one memory.

It should be noted that, in the foregoing communication apparatus embodiments, each unit may also be correspondingly referred to as a module, a component, a circuit, or the like.

An embodiment of this application provides a computer-readable storage medium, and the computer-readable storage medium stores instructions. The instructions are used to perform the method shown in FIG. 5.

An embodiment of this application provides a computer program product including instructions. When the computer program product runs on a communication apparatus, the communication apparatus is enabled to perform the method shown in FIG. 5.

An embodiment of this application provides a wireless communication apparatus, where the wireless communication apparatus stores instructions. When the wireless communication apparatus runs on the communication apparatuses shown in FIG. 4a, FIG. 4b, and FIG. 6 to FIG. 9, the communication apparatuses are enabled to perform the method shown in FIG. 5. The wireless communication apparatus may be a chip.

The foregoing descriptions about implementations allow a person skilled in the art to understand that, for the purpose of convenient and brief description, division of the foregoing functional modules is used as an example for illustration. During actual application, the foregoing functions may be allocated to different functional modules and implemented according to requirements, that is, an inner structure of a communication apparatus is divided into different functional modules to implement all or some of the functions described above.

The processor in embodiments of this application may include but is not limited to at least one of the following various computing devices that run software: a central processing unit (central processing unit, CPU), a microprocessor, a digital signal processor (DSP), a microcontroller unit (microcontroller unit, MCU), an artificial intelligence processor, or the like. Each computing device may include one or more cores configured to execute software instructions to perform an operation or processing. The processor may be an independent semiconductor chip, or may be integrated with another circuit into a semiconductor chip. For example, the processor may form a system-on-a-chip (SoC) with another circuit (for example, a codec circuit, a hardware acceleration circuit, or various buses and interface circuits). Alternatively, the processor may be integrated into an ASIC as a built-in processor of the ASIC, and the ASIC integrated with the processor may be separately packaged, or may be packaged with another circuit. In addition to the core configured to execute software instructions to perform an operation or processing, the processor may further include a necessary hardware accelerator, for example, a field programmable gate array (field programmable gate array, FPGA), a programmable logic device (PLD), or a logic circuit that implements a dedicated logic operation.

The memory in embodiments of this application may include at least one of the following types: a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM). In some scenarios, the memory may alternatively be a compact disc read-only memory (compact disc read-only memory, CD-ROM), another compact disc storage, an optical disc storage (including a compressed optical disc, a laser disc, an optical disc, a digital versatile disc, a Blu-ray disc, and the like), a magnetic disk storage medium, another magnetic storage device, or any other medium that can be used to carry or store expected program code in a form of instructions or a data structure and that can be accessed by a computer, but is not limited thereto.

In this application, "at least one" refers to one or more. "A plurality of" refers to two or more than two. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces) "or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between similar items that provide basically the same functions or purposes. A person skilled in the art may understand that the terms such as "first" and "second" do not limit a quantity or an execution sequence, and the terms such as "first" and "second" do not indicate a definite difference.

In the several embodiments provided in this application, it should be understood that the disclosed database accessmethod and apparatus may be implemented in other manners. For example, the described database access apparatus embodiments are merely examples. For example, division into the modules or the units is merely logical function division and there may be another division manner during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the database access apparatuses or units may be implemented in electronic, mechanical, or other forms.

The units described as separate parts may or may not be physically separate, and parts displayed as units may be one or more physical units, may be located in one place, or may be distributed in different places. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to a conventional technology, or all or some of the technical solutions may be implemented in the form of a software product. The software product is stored in a storage medium and includes several instructions for indicating a device (which may be a single-chip microcomputer, a chip, or the like) or a processor to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, comprising:
receiving, by a terminal device, a first transmission configuration indicator TCI from an access network device, wherein the first TCI comprises information about a first uplink reference signal and/or information about a first downlink reference signal, a spatial transmission filter corresponding to the first uplink reference signal is used for sending a plurality of uplink channels, and the first downlink reference signal and demodulation reference signals DMRSs of a plurality of downlink channels meet a quasi co-location QCL relationship; and
measuring, by the terminal device, the first downlink reference signal or a downlink reference signal associated with the first uplink reference signal, and performing beam failure detection based on a measurement result, wherein the spatial transmission filter corresponding to the first uplink reference signal is used for receiving the downlink reference signal associated with the first uplink reference signal.

2. The method according to claim 1, wherein the method further comprises:
sending the plurality of uplink channels through the spatial transmission filter corresponding to the first uplink reference signal;
receiving the plurality of downlink channels through the spatial transmission filter corresponding to the first uplink reference signal;
receiving the plurality of downlink channels through a spatial transmission filter used for receiving the first downlink reference signal; and/or
sending the plurality of uplink channels through the spatial transmission filter used for receiving the first downlink reference signal.

3. The method according to claim 1 or 2, wherein the method further comprises:
determining, by the terminal device based on the measurement result, that a beam failure occurs, and measuring a downlink reference signal associated with a candidate beam;
determining, based on a measurement result of the downlink reference signal associated with the candidate beam, a parameter of a first spatial transmission filter used for sending a beam failure recovery request;
sending the beam failure recovery request to the access network device through the first spatial transmission filter; and
receiving a beam failure recovery request response from the access network device through the first spatial transmission filter.

4. The method according to claim 3, wherein after the receiving a beam failure recovery request response from the access network device through the first spatial transmission filter, the method further comprises:
sending the plurality of uplink channels through the first spatial transmission filter, and/or receiving the plurality of downlink channels through the first spatial transmission filter.

5. The method according to claim 3, wherein the beam failure recovery request response comprises a second TCI, the second TCI comprises information about a second uplink reference signal and/or information about a second downlink reference signal, a spatial transmission filter corresponding to the second uplink reference signal is used for sending the plurality of uplink channels, and the second downlink reference signal and the DMRSs of the plurality of downlink channels meet a QCL relationship.

6. The method according to claim 5, wherein the method further comprises:
sending the plurality of uplink channels through the spatial transmission filter corresponding to the second uplink reference signal;
receiving the plurality of downlink channels through the spatial transmission filter corresponding to the second uplink reference signal;
receiving the plurality of downlink channels through a spatial transmission filter used for receiving the second downlink reference signal; and/or
sending the plurality of uplink channels through the spatial transmission filter used for receiving the second downlink reference signal.

7. A communication method, comprising:
determining, by an access network device, a first transmission configuration indicator TCI, wherein the first TCI comprises information about a first uplink reference signal and/or information about a first downlink reference signal, a spatial transmission filter corresponding to the first uplink reference signal is used for sending a plurality of uplink channels, and the first downlink reference signal and demodulation reference signals DMRSs of a plurality of downlink channels meet a quasi co-location QCL relationship; and
sending, by the access network device, the first TCI to a terminal device.

8. The method according to claim 7, wherein the method further comprises:
receiving, by the access network device, the plurality of uplink channels that are sent by the terminal device through the spatial transmission filter corresponding to the first uplink reference signal;
sending, by the access network device, the plurality of downlink channels to the terminal device, wherein the plurality of downlink channels are received through the spatial transmission filter corresponding to the first uplink reference signal;
sending, by the access network device, the plurality of downlink channels to the terminal device, wherein the plurality of downlink channels are received through a spatial transmission filter used for receiving the first downlink reference signal; and/or
receiving, by the access network device, the plurality of uplink channels that are sent by the terminal device through the spatial transmission filter used for receiving the first downlink reference signal.

9. The method according to claim 7 or 8, wherein the method further comprises:
receiving a beam failure recovery request that is sent by the terminal device through a first spatial transmission filter, wherein the first spatial transmission filter is determined by the terminal device by measuring a downlink reference signal associated with a candidate beam; and
sending a beam failure recovery request response to the terminal device, wherein the beam failure recovery request response is received through the first spatial transmission filter.

10. The method according to claim 9, wherein the method further comprises:
receiving the plurality of uplink channels that are sent by the terminal device through the first spatial transmission filter; and/or
sending the plurality of downlink channels to the terminal device, wherein the plurality of downlink channels are received through the first spatial transmission filter.

11. The method according to claim 9, wherein the beam failure recovery request response comprises a second TCI, the second TCI comprises information about a second uplink reference signal and/or information about a second downlink reference signal, a spatial transmission filter corresponding to the second uplink reference signal is used for sending the plurality of uplink channels, and the second downlink reference signal and the DMRSs of the plurality of downlink channels meet a QCL relationship.

12. The method according to claim 11, wherein the method further comprises:
receiving the plurality of uplink channels that are sent by the terminal device through the spatial transmission filter corresponding to the second uplink reference signal;
sending the plurality of downlink channels to the terminal device, wherein the plurality of downlink channels are received through the spatial transmission filter corresponding to the second uplink reference signal;
sending the plurality of downlink channels to the terminal device, wherein the plurality of downlink channels are received through a spatial transmission filter for the second downlink reference signal; and/or
receiving the plurality of uplink channels that are sent by the terminal device through the spatial transmission filter used for receiving the second downlink reference signal.

13. A communication apparatus, comprising:
a communication unit, configured to receive a first transmission configuration indicator TCI from an access network device, wherein the first TCI comprises information about a first uplink reference signal and/or information about a first downlink reference signal, a spatial transmission filter corresponding to the first uplink reference signal is used for sending a plurality of uplink channels, and the first downlink reference signal and demodulation reference signals DMRSs of a plurality of downlink channels meet a quasi co-location QCL relationship; and
a processing unit, configured to: measure the first downlink reference signal or a downlink reference signal associated with the first uplink reference signal, and perform beam failure detection based on a measurement result, wherein the spatial transmission filter corresponding to the first uplink reference signal is used for receiving the downlink reference signal associated with the first uplink reference signal.

14. The apparatus according to claim 13, wherein
the communication unit is further configured to: send the plurality of uplink channels through the spatial transmission filter corresponding to the first uplink reference signal;
receive the plurality of downlink channels through the spatial transmission filter corresponding to the first uplink reference signal;
receive the plurality of downlink channels through a spatial transmission filter used for receiving the first downlink reference signal; and/or
send the plurality of uplink channels through the spatial transmission filter used for receiving the first downlink reference signal.

15. The apparatus according to claim 13 or 14, wherein
the processing unit is further configured to: determine, based on the measurement result, that a beam failure occurs, measure a downlink reference signal associated with a candidate beam, and determine, based on a measurement result of the downlink reference signal associated with the candidate beam, a parameter of a first spatial transmission filter used for sending a beam failure recovery request; and
the communication unit is further configured to: send the beam failure recovery request to the access network device through the first spatial transmission filter; and receive a beam failure recovery request response from the access network device through the first spatial transmission filter.

16. The apparatus according to claim 15, wherein the communication unit is further configured to: send the plurality of uplink channels through the first spatial transmission filter, and/or receive the plurality of downlink channels through the first spatial transmission filter.

17. The apparatus according to claim 15, wherein the beam failure recovery request response comprises a second TCI, the second TCI comprises information about a second uplink reference signal and/or information about a second downlink reference signal, a spatial transmission filter corresponding to the second uplink reference signal is used for sending the plurality of uplink channels, and the second downlink reference signal and the DMRSs of the plurality of downlink channels meet a QCL relationship.

18. The apparatus according to claim 17, wherein the communication unit is further configured to: send the plurality of uplink channels through the spatial transmission filter corresponding to the second uplink reference signal;
receive the plurality of downlink channels through the spatial transmission filter corresponding to the second uplink reference signal;
receive the plurality of downlink channels through a spatial transmission filter used for receiving the second downlink reference signal; and/or
send the plurality of uplink channels through the spatial transmission filter used for receiving the second downlink reference signal.

19. A communication apparatus, comprising:
a processing unit, configured to determine a first transmission configuration indicator TCI, wherein the first TCI comprises information about a first uplink reference signal and/or information about a first downlink reference signal, a spatial transmission filter corresponding to the first uplink reference signal is used for sending a plurality of uplink channels, and the first downlink reference signal and demodulation reference signals DMRSs of a plurality of downlink channels meet a quasi co-location QCL relationship; and
a communication unit, configured to send the first TCI to a terminal device.

20. The apparatus according to claim 19, wherein the communication unit is further configured to: receive the plurality of uplink channels that are sent by the terminal device through the spatial transmission filter corresponding to the first uplink reference signal;
send the plurality of downlink channels to the terminal device, wherein the plurality of downlink channels are received through the spatial transmission filter corresponding to the first uplink reference signal;
send the plurality of downlink channels to the terminal device, wherein the plurality of downlink channels are received through a spatial transmission filter used for receiving the first downlink reference signal; and/or
receive the plurality of uplink channels that are sent by the terminal device through the spatial transmission filter used for receiving the first downlink reference signal.

21. The apparatus according to claim 19 or 20, wherein the communication unit is further configured to: receive a beam failure recovery request that is sent by the terminal device through a first spatial transmission filter, wherein the first spatial transmission filter is determined by the terminal device by measuring a downlink reference signal associated with a candidate beam; and
send a beam failure recovery request response to the terminal device, wherein the beam failure recovery request response is received through the first spatial transmission filter.

22. The apparatus according to claim 21, wherein the communication unit is further configured to: receive the plurality of uplink channels that are sent by the terminal device through the first spatial transmission filter; and/or
send the plurality of downlink channels to the terminal device, wherein the plurality of downlink channels are received through the first spatial transmission filter.

23. The apparatus according to claim 21, wherein the beam failure recovery request response comprises a second TCI, the second TCI comprises information about a second uplink reference signal and/or information about a second downlink reference signal, a spatial transmission filter corresponding to the second uplink reference signal is used for sending the plurality of uplink channels, and the second downlink reference signal and the DMRSs of the plurality of downlink channels meet a QCL relationship.

24. The apparatus according to claim 23, wherein the communication unit is further configured to: receive the plurality of uplink channels that are sent by the terminal device through the spatial transmission filter corresponding to the second uplink reference signal; and/or
send the plurality of downlink channels to the terminal device, wherein the plurality of downlink channels are received through the spatial transmission filter corresponding to the second uplink reference signal.

25. A communication apparatus, comprising a processor, wherein the processor is coupled to a memory;
the memory is configured to store a computer program; and
the processor is configured to execute the computer program stored in the memory, to enable the apparatus to perform the method according to any one of claims 1 to 12.

26. A computer-readable storage medium, comprising a program or instructions, wherein when the program or the instructions are run by a processor, the method according to any one of claims 1 to 12 is performed.

27. A computer program product, wherein the computer program product comprises instructions; and when the instructions are run, the method according to any one of claims 1 to 12 is performed.

28. A chip, wherein the chip comprises a processor and an interface circuit, the interface circuit is coupled to the processor, and the processor is configured to run a computer program or instructions, so that the method according to any one of claims 1 to 12 is performed.
